# EUROPEAN PATENT APPLICATION

(11) **EP 3 967 919 A1**
(43) Date of publication of application: **16.03.2022**
(21) Application number: 21189878.8
(22) Date of filing: 05.08.2021
(51) Int. Cl.: F16M 13/00, F16M 11/04, F16M 11/14, F16M 13/02

(54) **MOBILE DEVICE HOLDER**

(30) Priority: 24.08.2020 CA 3090888
(71) Applicant: Sjodin, Stephen, Bas-Cap-Pele New Brunswick E4N 1A7 (CA)
(72) Inventor: Sjodin, Stephen, Bas-Cap-Pele New Brunswick E4N 1A7 (CA)
(74) Representative: Jenkins, Peter David

(57) **Abstract**

A mobile device holder is provided. The mobile device holder comprises a device holding structure adapted for substantially securely holding at least a mobile device. A device holding structure support plate is mounted to the device holding structure. A pillow is connected to the device holding structure support plate.

## Description

### FIELD OF THE INVENTION

The present invention relates to holders for mobile devices, and more particularly to a mobile device holder with a pillow for enabling comfortable use of mobile devices in recreational settings.

### BACKGROUND OF THE INVENTION

Mobile phones and tablet computers have become an indispensable part of life with the developing technology and changing human habits. People intensely use these devices during their recreational time, for example, for watching movies, communication with friends on social media, or surfing the Internet. During their recreational time people frequently use these devices while sitting on a sofa or lying in bed holding the mobile device with one hand and operating it with the other hand. The hand holding the mobile device may get tired and/or the positioning of the mobile device when holding it with one hand may be too low causing neck strain. Supporting a mobile device with pillows and blankets is tentative at best and near impossible with more than one mobile device.

Various table top stands are available for placing the mobile device at an angle to a table top. Table top stands require a substantially flat, horizontal, and stationary supporting surface for placing the same thereon and, therefore, are not practical on a user's lap when sitting on a sofa or when lying on a bed in a relaxing position.

Other products designed for supporting mobile devices when the user is in a relaxed position have numerous drawbacks such as: being too stiff to conform to the shape of the human body; having high centres of gravity causing them to fall over; holding only one mobile device; not being able to hold the mobile device securely; making it difficult to attach/remove the mobile device; making it difficult to position the mobile device at an optimal or even usable viewing angle; loss of pliability and loft in products having pillows filled with heavy foam off-cuts; and, in products having pillows filled with Styrofoam beads the same create noise and crush after a relatively short time of use.

It is desirable to provide a mobile device holder that is capable of supporting mobile devices when the user is in one of various relaxed positions.

It is also desirable to provide a mobile device holder that is capable of conforming to the shape of a user's body when the user is in one of various relaxed positions.

It is also desirable to provide a mobile device holder that has a centre of gravity such that the mobile device holder with the mobile device(s) attached is prevented from falling over.

It is also desirable to provide a mobile device holder that is capable of holding more than one mobile device.

It is also desirable to provide a mobile device holder that enables easy attachment/removal of the mobile device(s) and is capable of securely holding the mobile devices when the user is in one of various relaxed positions.

It is also desirable to provide a mobile device holder that has a pillow that is substantially noiseless and maintains its pliability and loft.

### SUMMARY OF THE INVENTION

Accordingly, one object of the present invention is to provide a mobile device holder that is capable of supporting mobile devices when the user is in one of various relaxed positions.

Another object of the present invention is to provide a mobile device holder that is capable of conforming to the shape of a user's body when the user is in one of various relaxed positions.

Another object of the present invention is to provide a mobile device holder that has a centre of gravity such that the mobile device holder with the mobile device(s) attached is prevented from falling over.

Another object of the present invention is to provide a mobile device holder that is capable of holding more than one mobile device.

Another object of the present invention is to provide a mobile device holder that enables easy attachment/removal of the mobile device(s) and is capable of securely holding the mobile devices when the user is in one of various relaxed positions.

Another object of the present invention is to provide a mobile device holder that has a pillow that is substantially noiseless and maintains its pliability and loft.

According to one aspect of the present invention, there is provided a mobile device holder. The mobile device holder comprises a device holding structure adapted for substantially securely holding at least a mobile device. A device holding structure support plate is mounted to the device holding structure. A pillow is connected to the device holding structure support plate.

According to the aspect of the present invention, there is provided a mobile device holder. The mobile device holder comprises a device holding structure adapted for substantially securely holding at least a mobile device. A device holding structure support plate is mounted to the device holding structure. A pillow is connected to the device holding structure support plate. The device holding structure is adapted for simultaneously holding a tablet computer and a smart phone and comprises a portion adapted for holding the smart phone, the portion adapted for holding the smart phone being pivotally movable with respect to the device holding structure support plate.

According to the aspect of the present invention, there is provided a mobile device holder. The mobile device holder comprises a device holding structure adapted for substantially securely holding at least a mobile device. A device holding structure support plate is mounted to the device holding structure. A pillow support plate is mounted to a pillow and a connecting mechanism is adapted for removable and re-attachable mounting the device holding structure support plate to the pillow support plate.

According to the aspect of the present invention, there is provided a mobile device holder. The mobile device holder comprises a device holding structure adapted for substantially securely holding at least a mobile device. A device holding structure support plate is mounted to the device holding structure. A pillow is connected to the device holding structure support plate. A rim structure is mounted to the device holding structure support plate and surrounds the device holding structure. The rim structure is sufficiently flexible for providing a comfortable rest for a user's hands, but also sufficiently stiff for protecting the mobile devices attached to the device holding structure.

According to the aspect of the present invention, there is provided a mobile device holder. The mobile device holder comprises a device holding structure adapted for substantially securely holding at least a mobile device. A device holding structure support plate is mounted to the device holding structure. A connecting structure is mounted to the device holding structure support plate. The connecting structure is adapted for being mated with a respective second connecting structure belonging to one of a pillow, a desk mount, and a wall mount.

The advantage of the present invention is that it provides a mobile device holder that is capable of supporting mobile devices when the user is in one of various relaxed positions.

A further advantage of the present invention is that it provides a mobile device holder that is capable of conforming to the shape of a user's body when the user is in one of various relaxed positions.

A further advantage of the present invention is that it provides a mobile device holder that has a centre of gravity such that the mobile device holder with the mobile device(s) attached is prevented from falling over.

A further advantage of the present invention is that it provides a mobile device holder that is capable of holding more than one mobile device.

A further advantage of the present invention is that it provides a mobile device holder that enables easy attachment/removal of the mobile device(s) and is capable of securely holding the mobile devices when the user is in one of various relaxed positions.

A further advantage of the present invention is that it provides a mobile device holder that has a pillow that is substantially noiseless and maintains its pliability and loft.

### BRIEF DESCRIPTION OF THE DRAWINGS

A preferred embodiment of the present invention is described below with reference to the accompanying drawings, in which:
Figures 1 and 2 are simplified block diagrams illustrating in top perspective views a mobile device holder according to a preferred embodiment of the invention without and with the mobile devices attached, respectively;
Figures 3 and 4 are simplified block diagrams illustrating in a top perspective view and a bottom perspective view, respectively, a device holding structure support plate with a device holding structure and a ball structure mounted thereto of the mobile device holder according to the preferred embodiment of the invention;
Figures 5 and 6 are simplified block diagrams illustrating in top perspective views the device holding structure of the mobile device holder according to the preferred embodiment of the invention;
Figures 7 and 8 are simplified block diagrams illustrating in a bottom perspective view and a bottom perspective view in ghost, respectively, a top structure of the mobile device holder according to the preferred embodiment of the invention;
Figures 9 to 11 are simplified block diagrams illustrating in perspective views a socket structure for being connected to the ball structure of the mobile device holder according to the preferred embodiment of the invention;
Figures 12 and 13 are simplified block diagrams illustrating in a bottom perspective view partially in ghost and a side view partially in ghost, respectively, a pillow of the mobile device holder according to the preferred embodiment of the invention;
Figure 14 is a simplified block diagram illustrating in a side view movement between the top structure and the pillow of the mobile device holder according to the preferred embodiment of the invention;
Figure 15 is a simplified block diagram illustrating in a side view partially in ghost location of a centre of gravity of the mobile device holder according to the preferred embodiment of the invention;
Figures 16 to 18 are simplified block diagrams illustrating in top perspective views employment of the of the mobile device holder according to the preferred embodiment of the invention with a user in various positions; and,
Figures 19 and 20 are simplified block diagrams illustrating in perspective views a desk mount and a wall mount adapted for being connected to the top structure of the mobile device holder according to the preferred embodiment of the invention with a user in various positions.

### DESCRIPTION OF THE PREFERRED EMBODIMENT

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are now described.

While the description of the preferred embodiments hereinbelow is with reference to supporting a smart phone and a tablet computer, it will become evident to those skilled in the art that the embodiments of the invention are not limited thereto, but are also adaptable for supporting a different number of devices and different types of devices such as, for example, an e-reader or personal digital assistant computer.

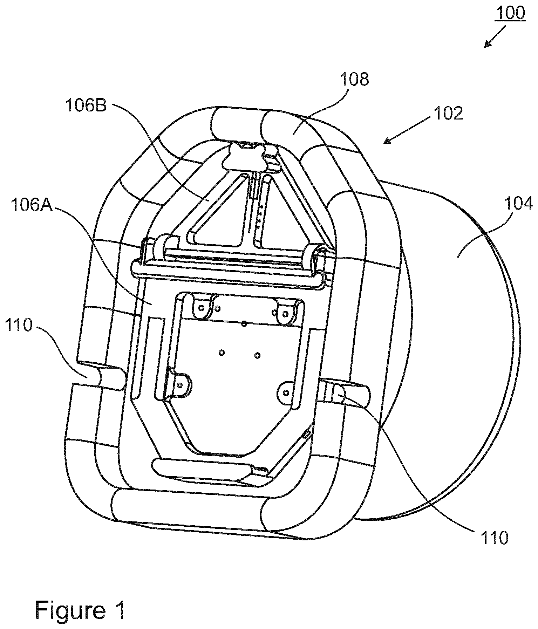

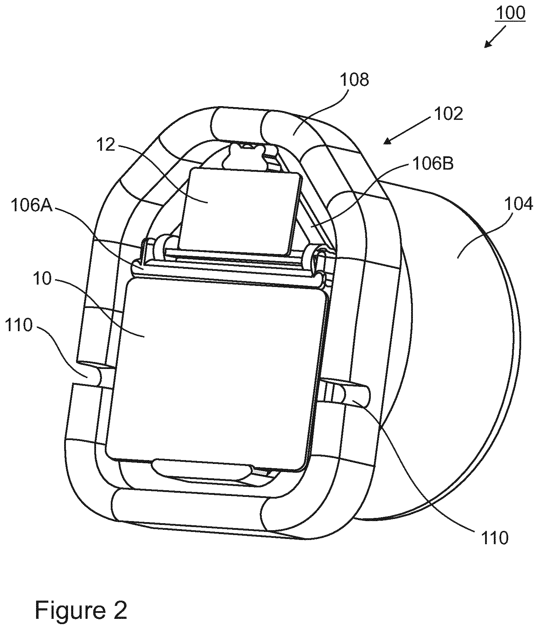

Referring to Figures 1 to 15, a mobile device holder 100 according to a preferred embodiment of the invention is provided. The mobile device holder 100 comprises top structure 102 with device holding structure 106A, 106B adapted for substantially securely holding at least a mobile device. Preferably, the device holding structure 106A, 106B is mounted to device holding structure support plate 112. The mobile device holder 100 further comprises pillow 104 connected to the device holding structure support plate 112 of the top structure 102. For example, the device holding structure 106A, 106B is adapted for holding two mobile devices such as a tablet computer 10, via portion 106A thereof, and a smart phone 12, via portion 106B thereof, as illustrated in Figure 2, thus enabling the user to simultaneously use both mobile devices, for example, for watching a movie on the tablet computer 10 while texting a friend using the smart phone 12.

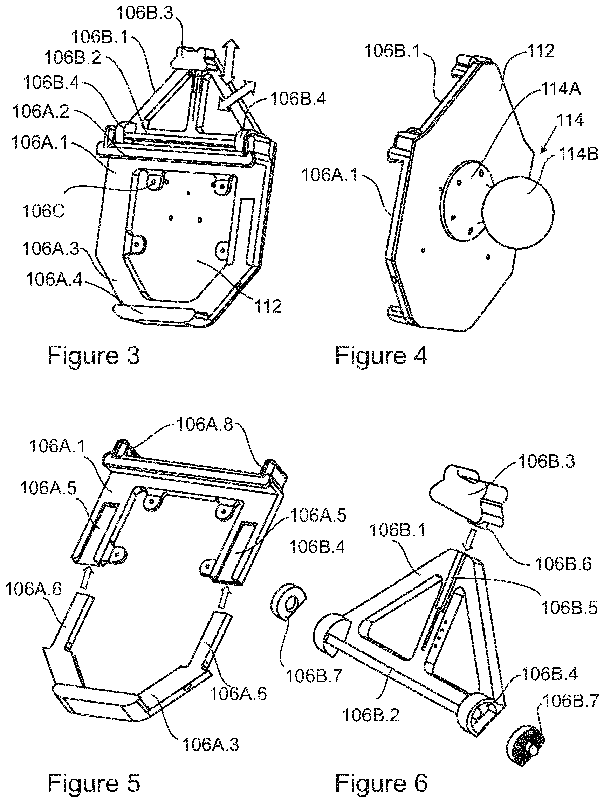

Figures 3 to 6 illustrate a preferred implementation of the device holding structure 106A, 106B and the device holding structure support plate 112. Base element 106A.1 of the device holding structure portion 106A is mounted to the device holding structure support plate 112 via mounting elements 106C. The base element 106A.1 comprises a first abutment 106A. 2. Abutment element 106A.3 comprising second abutment 106A.4 is longitudinally movable mounted to the base element 106A.1 via guiding bars 106A. 6 accommodated in respective guiding channels 106A. 5 disposed in the base element 106A.1, thus providing a clamping mechanism for securely holding the first mobile device, for example, the tablet computer 10, by abutting two opposite sides of the mobile device between the first abutment 106A.2 and the second abutment 106A.4. Preferably, the clamping mechanism is spring loaded in a conventional manner, for example, by disposing an extension spring (not shown) in each of the guiding channels 106A. 5 with the same being mounted at a first end to an end of each of the guiding bars 106A. 6 and at a second end to an end of each of the guiding channels 106A.5, thus enabling easy attachment/removal of the mobile device 10.

Further preferably, the device holding structure support plate 112 is removable and re-attachable mounted to the pillow 104, for example, via a connecting mechanism comprising ball structure 114 with a mounting element 114A thereof being mounted to the device holding structure support plate 112, as illustrated in Figure 4. Ball element 114B is adapted for being accommodated in a socket disposed in the pillow 104, as will be described hereinbelow.

Further preferably, base element 106B.1 of the device holding structure portion 106B is pivotally movable mounted to the base element 106A.1, as indicated by the block arrow in Figure 3. Pivotal movement and holding of the base element 106B.1 having a desired orientation is provided, for example, by employing conventional spring loaded face gears 106B.7 accommodated in respective sockets 106A.8 and 106B.4 disposed in the base elements 106A.1 and 106B.1, respectively. The base element 106B.1 comprises a first abutment 106B.2. Abutment element 106B. 3 is longitudinally movable mounted to the base element 106B.1 via guiding bar 106B.6 accommodated in respective guiding channel 106B.5 disposed in the base element 106B.1, thus providing a clamping mechanism for securely holding the second mobile device, for example, smart phone 12, by abutting two opposite sides of the second mobile device between the first abutment 106B.2 and the abutment element 106B.3. Preferably, the clamping mechanism is spring loaded in a conventional manner, for example, by disposing an extension spring (not shown) in the guiding channel 106B.5 with the same being mounted at a first end to an end of the guiding bar 106B.6 and at a second end to an end of the guiding channels 106B. 5, thus enabling easy attachment/removal of the mobile device 12.

The spring loaded clamping mechanisms of the device holding structure 106A, 106B securely hold the mobile devices 10 and 12 when the user is in one of various relaxed positions.

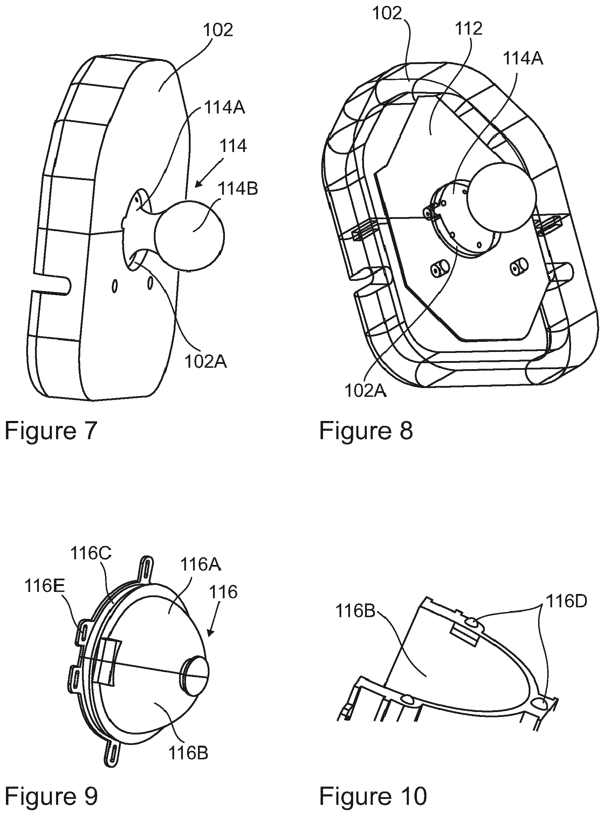

Figures 7 and 8 illustrate a preferred implementation of the top structure 102. The device holding structure support plate 112 and thus the device holding structure 106A, 106B is surrounded by bumper structure 108 for forming a protective rim around the mobile devices 10, 12 when attached to the device holding structure 106A, 106B and for providing a comfortable rest for a user's hands when manually interacting with the mobile devices 10, 12 . The bumper structure 108, preferably, extends from the device holding structure support plate 112 a sufficient distance, for example, 6 cm, such that it extends further than the mobile devices 10, 12 attached to the device holding structure 106A, 106B. The bumper structure 108 is, preferably, sufficiently flexible for providing a comfortable rest for a user's hands, but also sufficiently stiff for protecting the mobile devices 10, 12 attached to the device holding structure 106A, 106B. Optionally, indentations 110 are provided to accommodate charging cables and/or headphone cables connected to the mobile device 10.

The components of the device holding structure 106A, 106B, the device holding structure support plate 112, and the ball structure 114 are made of, for example, a suitable plastic material such as PolyEthylene (PE) or PolyPropylene (PP) using conventional plastic molding technology. The thickness of the device holding structure support plate 112 is determined dependent on the size and the chosen material thereof such that the same has sufficient rigidity for securely holding the device holding structure 106A, 106B. The mounting elements 106C of the device holding structure 106A, 106B, as well as the mounting element 114A of the ball structure 114 are mounted to the device holding structure support plate 112 in a conventional manner using, for example, screw fasteners, pop rivets, or an adhesive.

The bumper structure 108 is made in a conventional manner, for example, by vacuum modeling a vinyl-type plastic material over a male mould forming a cover layer and filling the inside space with an expanding foam-rubber material which adheres to the interior surface of the cover layer. Before injecting the foam-rubber material, the device holding structure support plate 112 is placed inside the cover layer which becomes embedded in the bumper structure 108 after the foam injection, thus forming the top structure 102, as illustrated in Figures 1, 7 and 8, to which the device holding structure 106A, 106B and the ball structure 114 are attached thereto as described hereinabove. The top structure 102 comprises opening 102A for accommodating the mounting element 114A of the ball structure 114 therein. The bumper structure 108 is, preferably, made such that it is sufficiently flexible for providing a comfortable rest for a user's hands, for example, that it can be easily squeezed by hand, but is also sufficiently stiff for protecting the mobile devices 10, 12 attached to the device holding structure, for example, that it keeps its shape under the weight of the mobile device holder 100 plus the mobile devices 10 and 12.

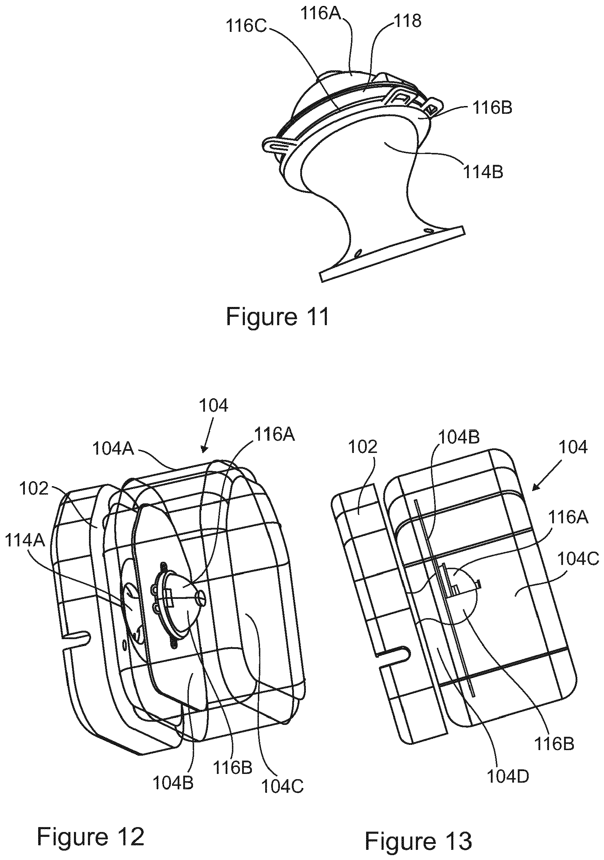

Figures 9 to 13 illustrate a preferred implementation of the connecting mechanism. The connecting mechanism comprises the ball structure 114 with ball element 114B which is adapted for being accommodated in a respective socket structure 116 such that the ball structure 114 is secured to the socket structure 116, as illustrated in Figure 11. Further preferably, the socket structure 116 comprises two half portions 116A, 116B held together via one or more flexible ring(s) 118 accommodated in groove 116C, to enable slight separation of the two half portions 116A, 116B during mating of the ball element 114B with the socket structure 116 for enabling easy removal and re-attachment of the ball structure 114 from/to the socket structure 116, as illustrated in Figures 9 and 10. In order to provide guidance during mating of the two half portions 116A, 116B comprise respective guiding elements 116D such as, for example, protrusions for being accommodated in respective indentations. The socket structure 116 is mounted to pillow support plate 104B, in proximity to an opening disposed therein for enabling passage of the ball element 114B therethrough, such that at least one of the two half portions 116A, 116B is slightly movable with respect to the other half portion and the pillow support plate 104B. For example, the at least one of the two half portions 116A, 116B comprises elongated bores 116E for accommodating a fastening element such as, for example, a screw, therein with the bore 116E being movable with respect to the screw fixedly mounted to the pillow support plate 104B.

The socket structure 116 is made of, for example, a suitable plastic material such as PolyEthylene (PE) or PolyPropylene (PP) using conventional plastic molding technology. The flexible ring 118 is, for example, a commercially available O-ring.

Alternatively, different types of connecting mechanisms may be employed such as, for example, a bayonet-type or screw-type mechanism.

Further alternatively, the connecting mechanism may be omitted with the pillow being directly mounted to the bottom of the top structure 102 or the device holding structure support plate 112.

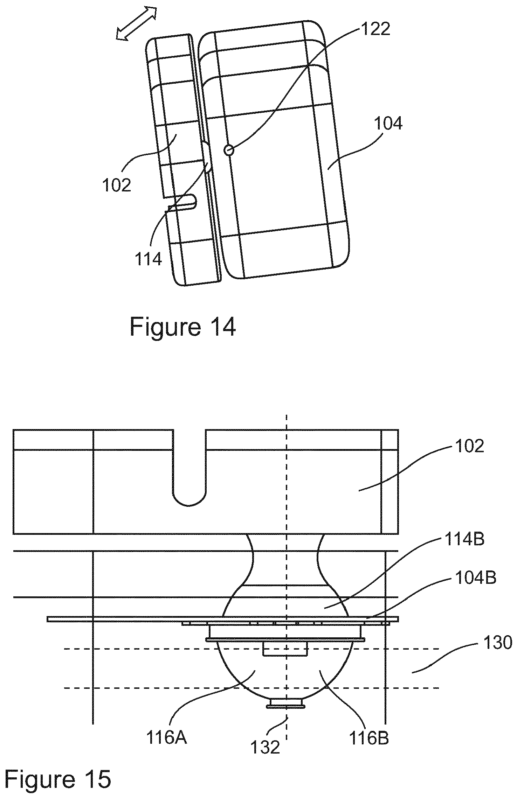

Referring to Figures 12 and 13, the pillow 104, preferably, comprises pillow casing 104A made of, for example, cotton fabric and sewn, with the pillow casing 104A being attached to the pillow support plate 104B in proximity to the opening disposed therein. The pillow casing 104A is attached to the pillow support plate 104B in a conventional manner using, for example, staples and/or an adhesive. The pillow's perimeter shape is maintained using, for example, foam-rubber adhered to the pillow support plate 104B. Preferably, the filling 104D between the pillow support plate 104B and the top structure 102 is sufficiently soft and flexible to enable different orientations of the top structure 102 with respect to the pillow 104 by rotating the ball element 114B in the socket structure 116 about pivot 122, as illustrated in Figure 14.

The pillow support plate 104B is made of, for example, a suitable plastic material such as PolyEthylene (PE) or PolyPropylene (PP) using conventional plastic molding technology. The thickness of the device holding structure support plate 112 is determined dependent on the size and the chosen material thereof such that the same has sufficient rigidity for securely holding the socket structure 116. Preferably, the perimeter of the pillow support plate 104B is smaller than the perimeter of the pillow 104 to enable sufficient movement of the top structure 102 with respect to the pillow 104. Preferably, the filling 104C, 104D of the pillow 104 is a high-loft fibre fill such as, for example, commercially available high-loft polyester fiber fillings, in order to provide a filling that is substantially noiseless and maintains its pliability and loft.

Preferably, the mobile device holder 100 is designed such that a center of gravity of the same with the mobile devices 10 and 12 attached thereto is located inside the pillow 104 in proximity to the pillow support plate 104B. For example, the mobile device holder 100 is designed such that the center of gravity is located approximately along line 132 through the ball structure 114 and within the range 130 below the pillow support plate 104B, as illustrated in Figure 15. This can be accomplished by designing the components of the mobile device holder 100 to have a predetermined weight and by choosing material and shape thereof accordingly.

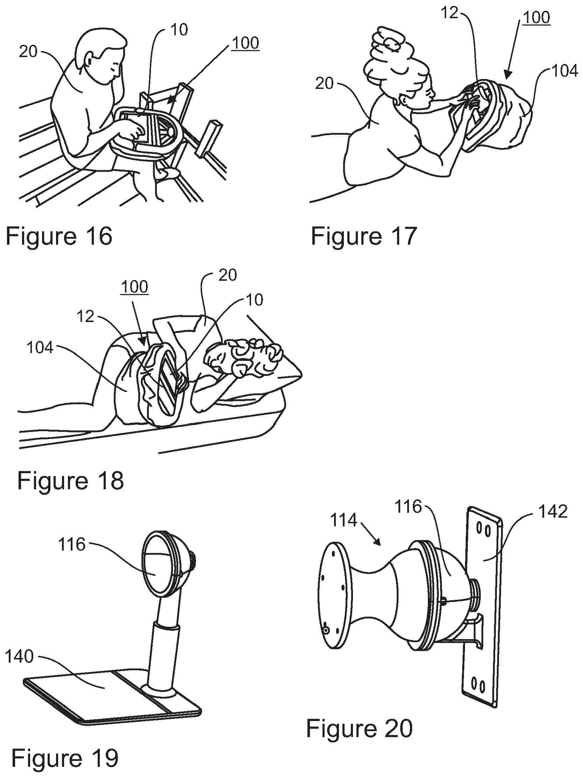

The mobile device holder 100 is capable of supporting the mobile devices 10, 12, when the user 20 is in one of various relaxed positions, for example, without the pillow 104 attached when sitting, as illustrated in Figure 16, or with the pillow 104 attached when lying on a bed as illustrated in Figures 17 and 18, and, furthermore, is capable of conforming to the shape of a user's body when the user 20 is in one of various relaxed positions, as illustrated in Figure 18.

Providing the mobile device holder 100 with a connecting mechanism for removable and re-attachable mounting the pillow 104 to the top structure 102 such as, for example, the the ball structure 114 for being secured to the socket structure 116, as described hereinabove, enables easy changing between different types of the pillow 104 for different uses. Furthermore, employment of the connecting mechanism also allows use of the top structure 102 with a desk mount 140 or a wall mount 142 comprising the socket structure 116, as illustrated in Figures 19 and 20, respectively, by simply inserting the ball structure 114 into the socket structure 116 thereof.

The present invention has been described herein with regard to preferred embodiments. However, it will be obvious to persons skilled in the art that a number of variations and modifications can be made without departing from the scope of the invention as described herein.

## Claims

1. A mobile device holder comprising:
a device holding structure adapted for substantially securely holding at least a mobile device;
a device holding structure support plate mounted to the device holding structure; and,
a pillow connected to the device holding structure support plate.

2. The holder according to claim 1 comprising:
a pillow support plate mounted to the pillow; and,
a connecting mechanism adapted for connecting the device holding structure support plate to the pillow support plate.

3. The holder according to claim 1 or claim 2 wherein the device holding structure is adapted for simultaneously holding a tablet computer and a smart phone.

4. The holder according to any one of claims 1 to 3 wherein the device holding structure comprises a portion adapted for holding a smart phone, the portion adapted for holding the smart phone being pivotally movable with respect to the device holding structure support plate.

5. The holder according to claim 4 wherein the portion adapted for holding the smart phone is pivotally movable mounted to the device holding structure via spring loaded face gears.

6. The holder according to any one of claims 1 to 5 wherein the device holding structure comprises at least a clamping mechanism, optionally wherein the at least a clamping mechanism is spring loaded.

7. The holder according to claim 2, or any claim dependent on claim 2, wherein the connecting mechanism is adapted for removable and re-attachable mounting the device holding structure support plate to the pillow support plate.

8. The holder according to claim 7 wherein the connecting mechanism comprises a ball structure mounted to the device holding structure support plate and a socket structure mounted to the pillow support plate with the socket structure being adapted for accommodating a portion of the ball structure therein.

9. The holder according to claim 8 wherein the socket structure comprises two half portions held together via a flexible ring for enabling removal and re-attachment of the ball structure thereto.

10. The holder according to any one of claims 1 to 9 comprising a rim structure mounted to the device holding structure support plate, the rim structure surrounding the device holding structure.

11. The holder according to claim 10 wherein the rim structure is sufficiently flexible for providing a comfortable rest for a user's hands, but also sufficiently stiff for protecting the mobile devices attached to the device holding structure.

12. The holder according to claim 2, or any claim dependent on claim 2, wherein a center of gravity of the holder with the at least a mobile device attached is inside the pillow in proximity to the pillow support plate.

13. The holder according to claim 2, or any claim dependent on claim 2, wherein the pillow comprises a casing mounted to the pillow support plate and a filling, optionally wherein the filling comprises a high-loft fiber fill material.

14. A mobile device holder comprising:
a device holding structure adapted for substantially securely holding at least a mobile device;
a device holding structure support plate mounted to the device holding structure; and,
a connecting structure mounted to the device holding structure support plate, the connecting structure being adapted for being mated with a respective second connecting structure.

15. The holder according to claim 14 wherein the connecting structure is adapted for being mated with the respective second connecting structure belonging to one of a pillow, a desk mount, and a wall mount.
